(19) **Europäisches Patentamt / European Patent Office / Office européen des brevets**

(11) **EP 2 555 051 B1**

(12) **EUROPEAN PATENT SPECIFICATION**

(45) Date of publication and mention
of the grant of the patent:
**18.12.2013 Bulletin 2013/51**

(51) Int Cl.:
**G03B 35/14** *(2006.01)*

(21) Application number: **12178973.9**

(22) Date of filing: **02.08.2012**

(54) **Apparatus and method of printing 3D-images**

Vorrichtung und Verfahren zum drucken 3D-Bildern

Appareil et procédé pour imprimer des images tridimensionelles

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.07.2012 KR 20120078875
02.08.2011 RU 2011132463**

(43) Date of publication of application:
**06.02.2013 Bulletin 2013/06**

(73) Proprietor: **Samsung Electronics Co., Ltd.
Suwon-si, Gyeonggi-do, 443-742 (KR)**

(72) Inventors:
• **Patana, Elena Igorevna
347916 Taganrog (RU)**
• **Safonov, Ilya Vladimirovich
119571 Moscow (RU)**

(74) Representative: **Clark, David James
Appleyard Lees
15 Clare Road
Halifax, Yorkshire HX1 2HY (GB)**

(56) References cited:
**EP-A2- 2 461 151        US-A1- 2004 125 447
US-A1- 2004 160 640    US-A1- 2012 005 624
US-A1- 2012 147 139**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

Apparatuses and methods.,. consistent with what is disclosed herein relate to forming image.2. Description of the Related Art

Anaglyph, lenticular lens and holography are generally known to give feeling of depth to one who sees a printed image. Among these, anaglyph relates to photographing an object with two cameras which are located away from each other at a distance corresponding to horizontal distance between left and right eyes, and printing the captured images in two colors, i.e., red and blue. When one sees the printed object through filters each in red and blue colors with left and right eyes, as the two eyes see the corresponding images, the viewer has binocular disparity and illusion of depth. This was devised by Ducos du Hanuron in France, 1894. Lenticular lens was generally used in 1960 mainly to meet the increasing demands for higher resolution, and nowadays used in most printing including cards, displays, catalogues, packages, etc. Lastly, hologram reproduces wavy surfaces on the recorded solid figure, thereby providing three dimensional image of the solid figure. The hologram has been generally applied in the prints using heat transfer printing.

Anaglyph generates generally a couple of artifacts in the process of creating and printing a 3D color anaglyph image, in which one is involved with defect according to inaccurate disparity (or depth) and the other is involved with defect according to inaccurate color mixing. Certain methods resolve inaccurate disparity measurement problems through stereo-pair aligning, color compensation of corresponding aligning, and disparity map correction. The user may manage the above processes through interface. By way of example, the user may shift right- and left-eye images in relation to each other to change the depth of 3D perception.

However, the problems involved with inaccurate color mixing have not been solved yet. The main issue is the harmony between the anaglyph image color and spectrum characteristics of the glasses, and the colors of the printer. The conventional methods use the same spectrum transmittance functions which are generally known, and the glass filters have different colors from each other. As a result, if the spectrum characteristics of the glasses do not match the printed colors, according to which the viewer feels ghost phenomenon when he or she sees anaglyph image through the 3D glasses. No solution has been suggested to address the above-mentioned problems yet. Considering the huge influence of the size of the printed image on the 3D perception, it is also problematic that the conventional software applications provided for the anaglyph image creation do not consider the size of the printed image.

Of course, some suggestions would have been made to solve the problems occurring in the creation of the anaglyph images. However, while such methods may address the known techniques that use the spectrum transparency of the glasses, none considers the relationship between the glasses and the printed colors. Further, all these techniques do not enhance anaglyph image quality, and fail to address ways to reduce ghost effect in the anaglyph images.

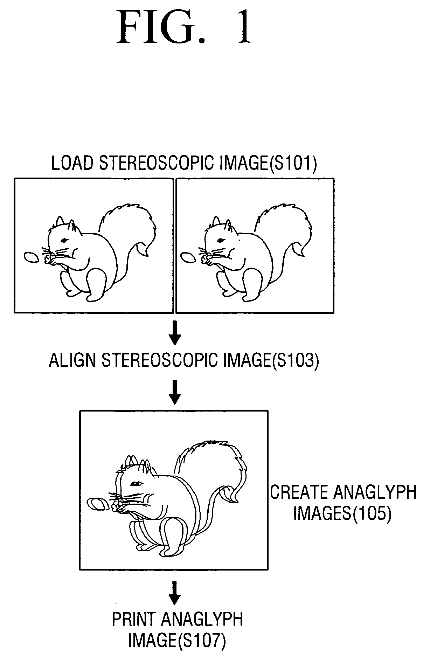

FIG. 1 illustrates a related image printing method.

Referring to FIG. 1, the conventional image printing method generally includes creating individual images for left- and right-eyes at S101, aligning and correcting images at S103, and printing a printout at S107 by creating the anaglyph image at S105.

However, the conventional method cannot apply the spectrum transmittance function of the 3D glasses to the printed anaglyph image, and does not perform color selection of an image forming apparatus to maximize the quality of the 3D perception with respect to the anaglyph image.

US 2004/0160640 describes a system for producing a three-dimensional or an animated device includes a computer system and a lenticular assembly. The computer system may include a printer, a monitor, a computer, and a digital video camera. Under operation by a user and enablement by accompanying computer code or software, the computer displays a preview window and a plurality of thumbnail windows on the monitor. The user then causes the computer to import a plurality of subject images to the thumbnail windows. The subject images include a subject in front of a temporary background, for example, a "green screen" background. The computer may then import a background image with a replacement background. The computer then generates a composite image by replacing the temporary background with the replacement background and interlacing the subject images. The user may modify and adjust the images as desired, for example, by changing the replacement background. When the composite image is satisfactory, the user may then cause the computer to export the processed image to the printer to generate a print of the processed image. The print may then be mounted to a lenticular sheet, thereby forming an animated or three-dimensional device. Anaglyph printing is also described.

US 2004/0125447 describes an image processing apparatus for generating image data for displaying a stereoscopic image on the basis of an image for a left eye and an image for a right eye, the image processing apparatus includes first detecting means for detecting image pairs each taken in a continuous shooting mode among a plurality of images, second detecting means for detecting image pairs each taken consecutively within a predetermined time among the plurality of images, presenting means for presenting the image pairs detected by the first detecting means or the second detecting means to a user, and generating means for setting one of two images comprising the image pair selected by the user among the image pairs presented by the presenting means as the image for the left eye and the other as the image for the right eye, and generating the image data for displaying the stereoscopic image.

SUMMARY OF THE INVENTION

Example embodiments of the present invention aim to provide an apparatus and a method of forming image.

Additional features and utilities of the example embodiments will be set forth in part in the description which follows and, in part, will be obvious from the description, or may be learned by practice of the general inventive concept.

According to the present invention there is provided an apparatus and method as set forth in the independent claims 1, 6. Other features of the invention will be apparent from the dependent claims, and the description which follows.

BRIEF DESCRIPTION OF THE DRAWINGS

These and/or other features and utilities of example embodiments of the present invention will become apparent and more readily appreciated from the following description of the embodiments, taken in conjunction with the accompanying drawings of which:

FIG. 1 illustrates a conventional image printing method;
FIG. 2 is a block diagram illustrating an image forming apparatus according to an embodiment of the present general inventive concept;
FIG. 3 is a flowchart illustrating a method of driving the image forming apparatus of FIG. 2;
FIG. 4 is a flowchart illustrating an image forming method according to an example embodiment;
FIG. 5 is a view illustrating a method of using a color pattern according to an example embodiment;
FIG. 6 is a flowchart illustrating a process of estimating a spectrum transmittance function of a glass filter with respect to a color printed by an image forming apparatus;
FIG. 7 is a view illustrating a grading system according to an example embodiment;
FIG. 8 is a block diagram illustrating an image forming apparatus according to an example embodiment;
FIG. 9 is a block diagram illustrating a printing control terminal according to an example embodiment;
FIG. 10 is a flowchart illustrating an image forming method according to an example embodiment; and
FIG. 11 is a flowchart illustrating a method of controlling printing according to an example embodiment.

DETAILED DESCRIPTION OF EMBODIMENTS

Certain exemplary embodiments of the present inventive concept will now be described in greater detail with reference to the accompanying drawings.

Reference will now be made in detail to the embodiments, examples of which are illustrated in the accompanying drawings, wherein like reference numerals refer to the like elements throughout. The embodiments are described below in order to explain the content of the figures. The matters defined in the description, such as detailed construction and elements, are provided to assist in a comprehensive understanding of the present inventive concept. Accordingly, it is apparent that the exemplary embodiments of the present inventive concept can be carried out without those specifically defined matters. Also, well-known functions or constructions are not described in detail since they would obscure the invention with unnecessary detail.

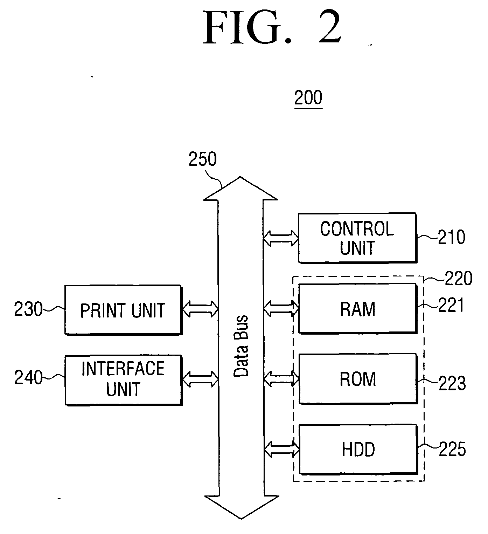

FIG. 2 is a block diagram of an image forming apparatus 200 according to an example embodiment.

Referring to FIG. 2, the image forming apparatus 200 according to an embodiment may include part or all of a control unit 210, a storage unit 220, a print unit 230, an interface unit 240, and a data bus 250, and may additionally include an image determining unit (not illustrated). Herein, the phrase "include part or all of" refers to an example in which some component(s) are integrated into another component(s), or in which specific component(s) is omitted. Hereinbelow, an example in which all of the above components are included will be explained for the sake of explanation.

The control unit 210 may control the overall operation of the storage unit 220, the print unit 230, or the interface unit 240. By way of example, the control unit 210 may control the storage unit 220 to store the image data incoming via the data bus 250, read out the stored image data from the storage unit 220, and print the read image data through the print unit 230. During this process, the control unit 210 may control or process an anaglyph image (or image) to be created with the execution of the program (or algorithm) stored at, for example, ROM 223, and output the created image to the print unit 230. Further, the control unit 210 may change the overall set values of the image forming apparatus 200 according to a command inputted through the interface unit 240. By way of example, if an estimated transmittance value of the filter with respect to certain 3D glasses is inputted through the interface unit 240, the control unit 210 may change the program stored at the ROM 223 or execute the program to reflect the estimated transmittance value during the creation of an anaglyph image. As used herein, the 'estimated transmittance value' of the filter with respect to certain 3D glasses may refer to a value which is selected by estimating the transmittance characteristic of the 3D glasses filter with respect to at least one pattern of the test color patterns printed at the image forming apparatus.

The storage unit 220 may store an executable program to execute the image forming apparatus 200, image data inputted from an outside of the image forming apparatus, and separate program implementable when 3D image such as anaglyph image is created. To this end, the storage unit 220 may include a RAM 221 to temporarily store image data, a ROM 223 to store the separate program involved with the creation of the 3D image, and an HDD 225 to store execute programs, etc. However, it is possible that other examples can also be usable as the storage unit 220. For example, the image data may be stored at the HDD 225. Further, as used herein, the '3D image' may refer to a collection of stereoscopic images (or images), while the stereoscopic or anaglyph image may refer to left- and right-eye images.

The separate program stored in the ROM 223 may convert, for example, inputted 2D image data into 3D image data to create a 3D image. By way of example, if the inputted 2D image data is determined to be a right-eye image, object and background of the corresponding right-eye image may be analyzed, depth information may be extracted therefrom, and a left-eye image corresponding to the right-eye image may be created using the extracted depth information. After that, anaglyph image or the like may be created by aligning the right-eye and left-eye images, or the like. However, the above is implemented when it is assumed that the 2D image data is loaded. If the 3D image data other than the 2D image data is inputted from an external device, the anaglyph image may be created without performing a separate process of creating the left-eye image. That is, according to an embodiment, the anaglyph image may be created by reflecting only the estimated transmittance value. Given this, an image determining unit (not illustrated) may additionally be included to determine whether the inputted image is a 2D image or a 3D image.

The print unit 230 may print pixel data stored at the storage unit 220 onto a printout (a print medium) and output the same under the control of the control unit 210. If the stored pixel data is a 2D image, the print unit 230 may output the 2D image. However, if the program provided within the ROM 223 is executed, the print unit 230 may output a 3D image. The 3D image may be printed according to the estimated transmittance value of the filter with respect to predetermined 3D glasses, for example, with respect to the 3D glasses that the user of the image forming apparatus 200 wears.

The interface unit 240 may be implemented in the form of a module, and involved with the creation of 3D image if the program stored at the ROM 223 is executed. As used herein, the phrase 'involved with the creation of a 3D image' may refer to the possibility of creating a 3D image in consideration of the fact that the user performs manual aligning of a stereoscopic image, changing parallax to change a depth of the 3D image, estimating transmittance, and adjusting a size of an anaglyph image. The information other than the estimated transmittance value may be referred to as additional information depending on embodiments.

In one embodiment, the interface unit 240 may play a role of a connection which is connected to a separate host device, such as a computer (or print control terminal), to receive a separate adjustment value or selected value. In another embodiment, the interface unit 240 may be loaded with a separate program to calculate the above-mentioned variables. The interface unit 240 may also connect to an external device such as a server and receive firmware. Accordingly, depending on roles, the interface unit 240 according to an embodiment may be referred to as a receiving unit, or the like. In one embodiment, if algorithm is provided to the interface unit 240 in the form of, for example, firmware, the corresponding firmware may provide the program stored at the ROM 223. The above may be performed under control of the control unit 210.

The data bus 250 is a line that electrically or circuit-wise connects the components within the image forming apparatus 200 such as the control unit 210, the storage unit 220, the print unit 230 or the interface unit 240. For example, if the above components of the image forming apparatus 200 are implemented as modules, respectively, the data bus 250 may be used to transmit data among the modules of the system.

The image forming apparatus 200 may be implemented as a copier, a facsimile, a scanner, or a multi-function unit which integrates therein the above-mentioned functionalities. The image forming apparatus 200 may use, for example, a test color pattern (or etalon, template or stereoscopic image pattern) which is printed at a predetermined printer to estimate the spectrum transmittance functions ($f_l(\lambda)$, $f_r(\lambda)$, wherein $\lambda$ is wavelength) of the glasses filter. In one embodiment, the color test pattern on the image forming apparatus 200 may be printed by an operation of printing a series of colors with different frequencies, saturations and hue, and printing according to user's instruction. As used herein, the term 'instruction' may refer to user command directing to execute a program stored at the ROM 223 to create the 3D image upon user's request.

As a result, the image forming apparatus 200 according to an embodiment is able to improve the ghost phenomenon occurring when the anaglyph image is viewed through 3D glasses, since the image forming apparatus 200 takes the spectrum transmittance function of the filter with respect to predetermined 3D glasses into consideration, i.e., the image forming apparatus 200 adjusts information related to the anaglyph image to be printed.

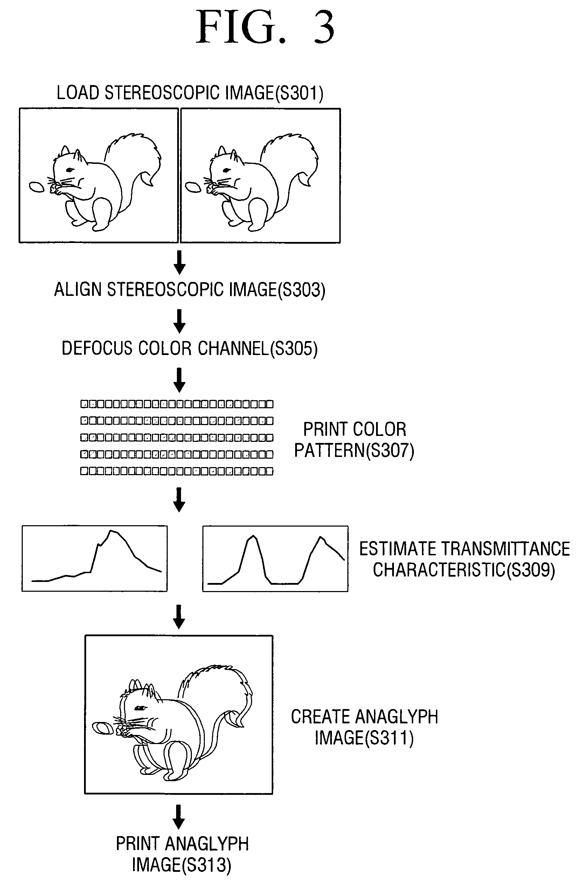

FIG. 3 is a flowchart illustrating a method of driving an image forming apparatus according to an example embodiment.

Referring to FIG. 3 along with FIG. 2 for convenience of explanation, the image forming apparatus 200 according to an embodiment may load a stereoscopic image, such as a 3D image, from an outside thereof at operation S301, or alternatively, create a 3D image using a 2D image in an event the 2D image is loaded. By way of example, the image forming apparatus 200 may determine that the inputted 2D image is a right-eye image, and thus analyze characteristics such as object and background of the 2D image and calculate depth information. Using the calculated depth information, the image forming apparatus 200 may create a left-eye image corresponding to the right-eye image.

Further, at operation S303, the image forming apparatus 200 may align the right- and left-eye images to create a stereoscopic image. As used herein, the expression 'aligning' may refer to arranging a left-eye image on a preceding right-eye image of a unit frame.

Next, the image forming apparatus 200 may create an anaglyph image by a projection method which takes into account the spectrum transmittance function of the filter with respect to predetermined 3D glasses. The above process may be substantially implemented by executing a program which is provided to create an anaglyph image reflecting the spectrum transmittance function estimated through the operations at operations S305 to S309. Since the image forming apparatus 200 performs the operations at operations S305 to S309 by executing a corresponding program, the above may be included as an image forming method.

If it is assumed that the image forming apparatus 200 performs an operation to reflect the spectrum transmittance rate, the image forming apparatus 200 may, first, perform color channel (red, blue) defocusing at operation S305. The color channel defocusing may be understood as, for example, a process to create a series of colors with different frequencies, saturations and hue, and print the same.

Accordingly, at operation S307, the image forming apparatus 200 prints a test color pattern (or table). As used herein, the 'pattern' may be a series of colors tabulated on a hue plane of an HSL color space (saturation: 0~360°, 0~1) or on a color plane. The colors in this space represent dependency of the colors on wavelength ($\lambda$) pretty well. The rows of the table represent hue in 0° to 330° range. The columns of the table represent the colors with saturation/purity of 1 to 0.2. In one embodiment, the series of colors on the table may be referred to as a plurality of patterns or stereoscopic image patterns.

Next, the image forming apparatus 200 at operation S309 may estimate a transmittance characteristic of the glasses filter with respect to the print pattern. While the above process substantially depends on the matching of visibility levels of the user, eventually, the image forming apparatus 200 can be understood as performing a process of processing estimated values which are generated as a result of the estimation. For example, the user may implement selection or adjustment to cause the estimated value to be reflected, according to which the image forming apparatus 200 may process the information regarding the corresponding estimated value. In other words, the corresponding estimated value may be reflected in the program to create a 3D image.

If the estimation is completed, the image forming apparatus 200 may create an anaglyph image at operation S311 which takes into consideration the spectrum transmittance function of the filter with respect to 3D glasses, and outputs an anaglyph image on a printout (print medium) and outputs the same at operation S313.

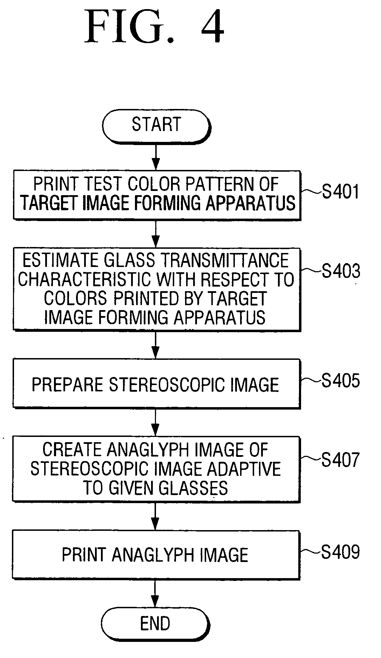

FIG. 4 is a view illustrating an image forming method according to an example embodiment.

Referring to FIG. 4 along with FIG. 2 for convenience of explanation, an image forming method in one embodiment may correspond to an operation of creating an anaglyph image by the projection method which takes into account the spectrum transmittance function of the filter with respect to predetermined 3D glasses (FIG. 3).

First, at operation S401, the image forming apparatus 200 may print a test color pattern (or stereoscopic image pattern, stereo-pair image pattern) for target printing. If a user determines that it is necessary to consider the spectrum transmittance function of the filter with respect to predetermined 3D glasses, the image forming apparatus 200 may perform the corresponding operation at operation S401 according to an incoming command. However, the above may be modified, and thus is not limited to the specific example provided above. Since the color pattern has been explained above, additional explanation will be omitted for the sake of brevity.

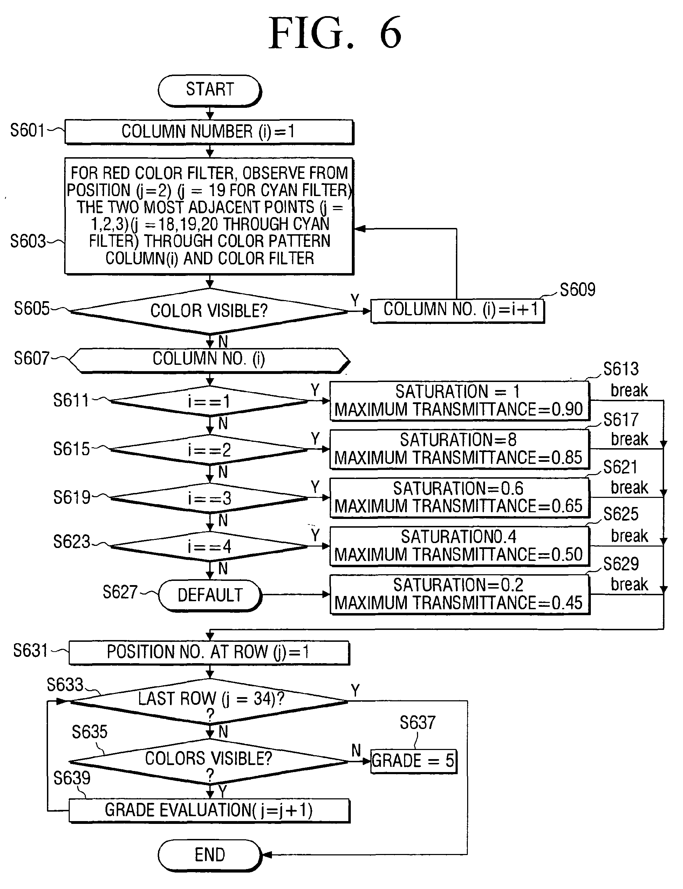

At operation S403, the image forming apparatus 200 estimates a transmittance characteristic of the glasses filter with respect to a print pattern. This process is necessary to maximize the color correspondence between the filter of the 3D glasses and the image forming apparatus 200 (e.g., printer). For example, it is assumed that the 3D glasses have red and cyan filter. The cyan is one of the three primary colors and is blue with slight feeling of green. In order to obtain an approximation function with respect to the spectrum transmittance of the glasses filter, visibility and non-visibility information of the color with respect to the pattern is estimated through the left filter and the right filter. Printing the test color pattern and estimating the spectrum transmittance function may be performed once, with respect to predetermined 3D glasses. The order of a user movement with respect to estimating the spectrum transmittance function will be explained below in greater detail with reference to FIG. 6. After matching of visibility levels by the user, it is determined which one of the actual spectrum transmittance functions of the filter is closest to the function received as a result of a user evaluation.

Further, at operation S405, the image forming apparatus 200 may perform an operation of preparing (or creating) a stereoscopic image. As used herein, the phrase 'preparing stereoscopic image' may well be understood as encompassing at least one of: geometrical aligning; color compensation; depth and disparity map estimation; image blurring by two color channels; and pixel information for range reduction of disparity or depth map of the image.

The geometrical aligning of the stereoscopic image may be performed in the manner explained in: Hsien-huang P. Wu and Chih-Cheng Chen "Projective Rectification with Minimal Geometric Distoration", pp.530,I-Tech,2007. Further, the color compensation of an image with respect to the stereoscopic image may be performed through, for example, histogram matching. The depth map estimation may be performed in the statistical method proposed by: Hongshi Yan and Jian Guo Liu "Robust Phase Correlation Based Sub-pixel Disparity Estimation", 4th SEAS DTC Technical Conference - Edinburgh 2009. The disparity map may be re-calculated on the depth map, and the depth map may be re-calculated on the disparity map. For various reasons, the depth map may be used in some cases, and the disparity map may be used in other cases.

The two color channels of the left- and right-eye images of the stereoscopic image, e.g., red and blue, may be blurred by an average filter. The filter variable may be determined depending on the size of the anaglyph image. Green color may not be blurred because the green color is better recognized with the human eyes than the other colors. The average filter may be expressed in the form of following mathematical formula:

[Mathematical formula 1]

$$\tilde{I}(x,y) = \frac{1}{(2N_x+1)(2N_y+1)} \sum_{n_x=-N_x}^{N_x} \sum_{n_y=-N_y}^{N_y} I(x-n_x, y-n_y)$$

where $I(x, y)$ represents pixel magnitude of several color channels (blue, red, green), in which $I(x, y) \in [0; 255]$ -is met, $(x, y)$ refers to pixel location on the image, in which $(x, y) \in A \times B$ is met, and A, B refers to a size of the image.

$\tilde{I}(x, y)$ represents an average of pixel magnitudes within a square area, and the size of the square area is determined depending on the size of the printed anaglyph image.

$(n_x, n_y)$ represents the pixel location within an average window in size of $N_x \times N_y$, $N_x \times N_y \subset A \times B$.

The range of the disparity map may decrease according to the size of the printed anaglyph image. Ghost effect may occur when a viewer sees the anaglyph image through the 3D glasses, due to interference with the waves reflected from the surface of the printed anaglyph image, and this has to be reduced. The above may be expressed in the form of mathematical formula:

[Mathematical formula 2]

$$\tilde{D}(i,j) = aD^P(i,j)$$

where $D(i, j)$ is a disparity value at position $(i, j) \in A \times B$ before conversion (A, B represents image size), and $\tilde{D}(i,j)$ represents disparity value at position $(i, j)$ after conversion. "a" and "P" are constant values which are determined according to the size of the printed anaglyph image, and these meet $0 \leq a \leq 1$, $0 < P < 1$

It is important that the disparity value is changed in the process of changing the size of the anaglyph image to maximize the quality of 3D perception. Changing the disparity may be performed non-linearly. That is, compared to the original disparity value, a larger disparity value should not be used in the event that the image size is increased, while nullification of the disparity value or loss of 3D effect should be avoided in the event that the image size is decreased. The depth map may also undergo the similar correction as the disparity map.

If all the preparatory operations from operation S401 to S405 are completed, the image forming apparatus 200 creates an anaglyph image which considers the spectrum transmittance function of the 3D glasses filter at operation S407. The direct creation of the anaglyph may be performed by the projection method proposed by: Eric Dubois "A projection method to generate anaglyph stereo images", Proc. of ICASSP, IEEE International Conference "Acoustic, Speech, and Signal Processing", vol.3, pp. 1661-1664, 2001.

To be specific, the anaglyph image may be created based on the following mathematical formula in one embodiment:

[Mathematical formula3]

$$\hat{V}_a(x) = N(R^TWR)^{-1} R^TWC_2V(x)$$

where x is a pixel location ($(x, y) \in A \times B$, A, B = image size) on the image.

Referring to <Mathematical formula 3>, it is possible that $\mathbf{R} = \begin{bmatrix} r_1 & r_2 & r_3 \end{bmatrix} = \begin{bmatrix} \mathbf{A_l} \\ \mathbf{A_r} \end{bmatrix}$, wherein $[A_l]_{ky} = a_{lkj} = \int \overline{p}_k(\lambda) d_j(\lambda) F_l(\lambda) d\lambda$, $[A_r]_{kj} = a_{rkj} = \int \overline{p}_k(\lambda) d_j(\lambda) F_r(\lambda) d\lambda$, and $F_l(\lambda)$ and $F_r(\lambda)$ represent actual spectrum transmittance functions of the filters with respect to left and right filters, and A is wavelength.

W may be expressed as a 6×6 weight factors matrix, $C_2 = \begin{bmatrix} C & 0 \\ 0 & C \end{bmatrix}$, which may be expressed as

$[C]_{kj} = c_{kj} = \int p_k(\lambda) d_j(\lambda) d\lambda$. This represents the color matching function for the standard tintometer evaluation spectator (meaning spectrum sensitivity of eyes) approved by the International Light Association. k represents an index with respect to each color component (red, blue green) (k=1, 2, 3), $d_j(\lambda)$ is one energy spectrum distribution of the standard tintometer illuminants, j represents an index with respect to each color component (j=1, 2, 3).

It is possible to express $\mathbf{V}(x) = [V_{l1}(x) \; V_{l2}(x) \; V_{l3}(x) \; V_{r1}(x) \; V_{r2}(x) \; V_{r3}(x)]^T$, and $\mathbf{V}_l(x) = [V_{l1}(x) \; V_{l2}(x) \; V_{l3}(x)]^T$ represents a left-eye image of the R, G, B stereoscopic image, and $\mathbf{V}_r(x) = [V_{r1}(x) \; V_{r2}(x) \; V_{r3}(x)]^T$ represents a right-eye image of the R, G, B stereoscopic image.

N is a normal matrix necessary to implement the condition $\hat{\mathbf{V}}_{aj} \in [0.1]$, and possibly expressed as $\mathbf{N} = diag(\mathbf{V}_{aj}'/\hat{\mathbf{E}}_{aj})$ (j=1, 2, 3, index for each color component), in which Va' refers to anaglyph vector possibly having maximum value necessary to normalize $\hat{\mathbf{V}}_a$, which meets the condition of $\mathbf{V}_a' = \begin{bmatrix} 1 & 1 & 1 \end{bmatrix}^T$ and the condition of $\hat{\mathbf{E}}_a = (\mathbf{R}^T\mathbf{WR})^{-1} \mathbf{R}^T\mathbf{WC}_2\mathbf{E}$.

In one embodiment, a method of preparing (or creating) a stereoscopic image may include operations of geometrically aligning left- and right-eye images of a stereoscopic image, compensating colors of the left- and right-eye images of the stereoscopic image, blurring at least one of the two color channels of the left- and right-eye images of the stereoscopic image, estimating a disparity map, correcting the disparity map with a view to reduce a disparity value that exceeds a threshold value, and changing the left- and right- eye images of the stereoscopic image according to the corrected disparity map.

Further, in an embodiment, the process of preparing (or creating) a stereoscopic image may include operations of geometrically aligning left- and right-eye images of the stereoscopic image, compensating colors of the left- and right-eye images of the stereoscopic image, blurring at least one of the two color channels of the left- and right-eye images of the stereoscopic image, estimating a depth map, correcting the depth map with a view to reduce a range of a depth value of a stage if exceeding a predetermined threshold value, and changing the left- and right-eye images of the stereoscopic image according to the corrected depth map.

After the above processes, at operation S409, the image forming apparatus 200 may print an anaglyph image which has been created at operation S407.

Of course, the color pattern printed by the predetermined image forming apparatus may be analyzed through the respective filters of the 3D glasses, by a viewer who sees the same through the 3D glasses. Accordingly, the viewer may create an anaglyph image with respect to any of the user's 3D glasses that are loaded with the color filter. Accordingly, anaglyph image brings in great 3D effect, and when viewed on a computer screen monitor, or printed on a hard copy, artifacts can be kept under minimum degree.

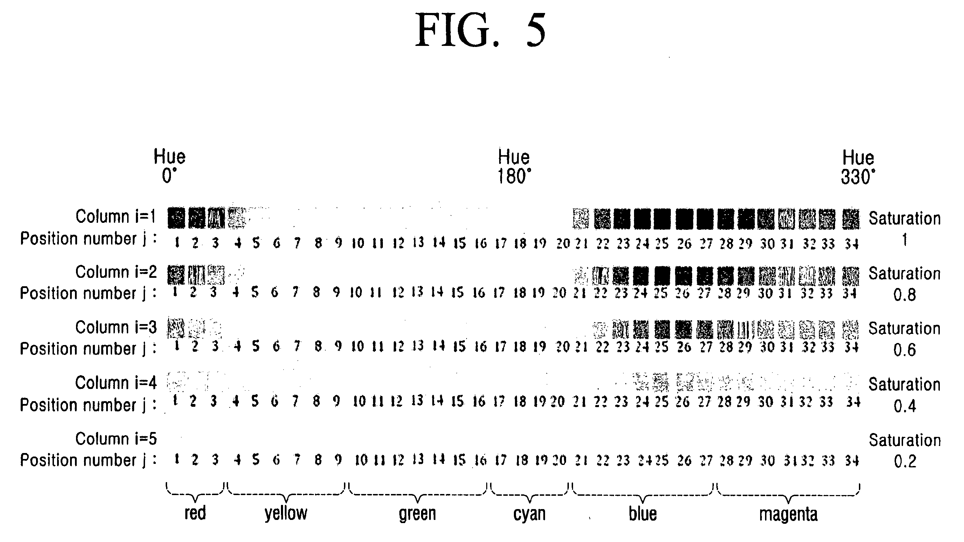

FIG. 5 is a view provided to explain a method for utilizing color pattern according to an example embodiment.

Referring to FIG. 5, a color pattern may be utilized to execute the instruction, i.e., to execute the program to create 3D image in the manner explained below.

First, the first column of the pattern is inspected through the left-side filter of the glasses and grades of the respective squares of the corresponding column are matched. For example, the grades may include 0 to 5 grades, in which 0 may indicates invisible and 5 indicates fully visible. If there is an invisible square, the column containing the corresponding square is found and visibility estimation is performed as explained above. The same operation is performed at the right-side filter. The printing in response to the instruction may be performed with respect to a series of colors which may be printed on both the same page and the following pages, or on separate pages.

As mentioned above, the 'pattern' refers to a series of colors tabulated on a hue (or simply, color) plane of the HSL color space (Hue: 0-360°, Saturation 0-1, Brightness, 0-1). This space represents dependency of the color on wavelength ($\lambda$) pretty well. The positions numbered 1-34 represent colors within a range of 0° to 330°. The columns of the table i = 1, i = 2 etc represent colors with saturations 1 to 0.2 (0.2 level) and purity. By way of example, glasses having a red or cyan filter are widely used. In order to obtain a spectrum transmittance function of the 3D glasses filter, it is necessary to evaluate the non-visibility of the colors using the red and cyan filters based on the patterns adjacent to the red and cyan colors. If the colors are integrated into the background, i.e., if the colors are not visible, these will pass through the filter completely. Generally, methods for estimating the spectrum transmittance functions enable estimation of the transmittance characteristic of all kinds of 3D glasses loaded with a variety of color filters.

The spectrum transmittance functions of the left- and right-side filters of the glasses may be estimated as follows. First, the spectrum transmittance function of the left-side filter is relatively roughly estimated based on the colors visible or invisible on the test color pattern which are determined by a viewer seeing the test color pattern through the left-side filter.

Next, the spectrum transmittance function of the right-side filter is relatively roughly estimated based on the colors visible or invisible on the test color pattern which are determined by the viewer seeing the test color pattern through the right-side filter.

After that, approximation may be performed, in which the spectrum transmittance function estimate is approximated to the function closest to the actual function of the filter selected from a specific set. This will be explained in greater detail below.

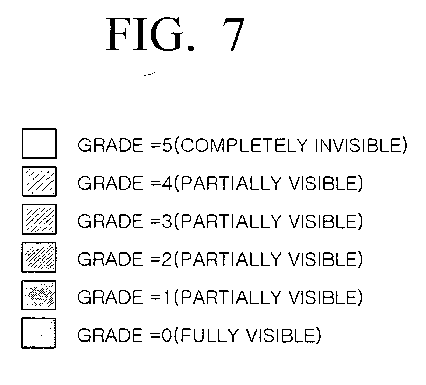

FIG. 6 is a flowchart illustrating a process of estimating spectrum transmittance function of the glass filter with respect to a color printed by an image forming apparatus, and FIG. 7 is a view illustrating a grading system according to an example embodiment.

Generally, color having $10° \pm 10°$ of hue corresponds to red having 700 nm $\pm$ 27.50 nm of wavelength, cyan having $180° \pm 10°$ of hue corresponds to cyan having 497 nm $\pm$ 3.75 nm wavelength, yellow having $50° \pm 10°$ of hue corresponds to yellow having 564 nm $\pm$ 11.25 nm of wavelength, and green having $120° \pm 10°$ of hue corresponds to green having 530 nm $\pm$ 5 nm of wavelength.

At operation S601, the approximation of the spectrum transmittance function begins as the inspection of the columns of the test color pattern begins from the first column. The first column of the test color pattern (labelled "i = 1") corresponds to saturation/purity = 1, brightness = 0.5, and hue = 0° to 330°.

It is assumed that the left-side filter of the 3D glasses is red. At operation S603, considering the fact that the three squares having $10° \pm 10°$(j=1, 2, 3) of hues correspond to red color having slight wavelength variation, and the viewer has to observe the first column with the red filter of the glasses.

At operation S605, whether the color of hue band of $10° \pm 10°$(j=1, 2, 3) is visible or not is determined. If determining invisible at operation S605, the maximum value of the spectrum transmittance function becomes 700 nm $\pm$ 27.50 nm at operation S607, and if determining visible at operation S605, the next column (labelled "i = 2") with lower saturation/purity is selected at operation S609, and then operations S603 and S605 repeat. At operation S629, if the color keeps appearing visible for columns labelled "i = 3", "i = 4", it is possible to select the lowest saturation/purity column for the sake of analysis. The maximum value of the spectrum transmittance function is determined depending on the selected saturation/purity (or number of columns of the test color pattern). The saturation/purity 1;0.8;0.6;0.4;0.2 correspond to the maximum value 0.9;0.85;0.65;0.50;0.45 of the spectrum transmittance function, respectively. If the column is selected from the test color pattern, the visibility level of each color square is analyzed.

At operation S631, the current position (j) of the selected column (or number of squares) is 1.

If the current position is other than the last position of the corresponding column at operation S633, the viewer may analyze the visibility level of the color square at operation S635, and matches the respective color squares with the grades between 0 and 5 at operation S637. An example of the grade system is illustrated in FIG. 7. Referring to FIG. 7, the invisible color square is a grade 5, and the fully visible color square is a grade 0. In the current saturation/purity, the respective estimated values 0, 1, 2, 3, 4, and 5 correspond to the spectrum transmittance 0, 0.20, 0.45, 0.60, 0.85, and 1.0 which depend according to the maximum transmittance (MaxTrans).

At operation S639, the operation moves to the next position on the corresponding column.

Accordingly, the spectrum transmittance function with respect to the red filter of the predetermined glasses is estimated.

It is also assumed that the right-side filter of the 3D glasses has cyan color. Estimating the spectrum transmission function of the cyan filter is similar to the above- explained operation. The cyan color has value of $180° \pm 10°$ (495 nm $\pm$ 5 nm). The viewer has to go through the entire sequences of the corresponding operations which are performed to estimate the spectrum transmittance function of the red filter. Note that, however, at selecting a column of operation S603, the squares having $180° \pm 1.0°$ (j=18, 19, 20) of hue corresponds to cyan color having a slight wavelength variation.

The remaining operations are performed in a similar manner as that performed to estimate the spectrum transmittance function of the red filter of the 3D glasses. It is also necessary to perform the corresponding operations in the similar manner with respect to any of the color filters of the 3D glasses.

The rough estimation of the spectrum transmittance function of the red filter of the 3D glasses is performed in the manner explained above. However, if the function acquired in the manner explained above is directly applied in the process of creating an anaglyph image, this will cause inaccurate color mixing and degraded quality when the 3D object is reproduced on the anaglyph image. In the known method of creating an anaglyph image using the actual spectrum transmittance function of the filter, for example, Roscolux filter function, may be used to obtain a high quality result.

Accordingly, the rough estimation of the spectrum transmittance function (f) may be approximated to the function (Fi) closest to the actual filter function that is selected from a certain set.

The approximation may include the following operations. First, Fi is selected according to <Mathematical formula 4>.

[Mathematical formula 4]

$$\left\| \hat{\lambda}_{\max(F_i)} - \hat{\lambda}_{\max(f)} \right\| \xrightarrow[i]{} \min$$

Mathematical formula 4 denotes estimation of the maximum position of a function Fi, in which Fi is the estimated left or right spectrum transmittance function $(F_l)$ or $(F_r)$. In actual example, the Roscolux filter (fi) represents the estimated left $(f_l)$ and right $(f_r)$ spectrum transmittance functions.

It is then necessary to apply the conditions to select the Roscolux filter with respect to the maximum values with the same wavelength, as expressed by:

[Mathematical formula 5]

$$\left\| \max\left(F_i\right) - \max\left(f\right) \right\| \xrightarrow[i]{} \min$$

Mathematical formula 5 represents the closest transmittance condition.

A method for creating an anaglyph image which is adaptively applicable to certain 3D glasses and a method for printing the anaglyph image with maintaining 3D perception at the corresponding glasses have been explained above. The above-explained methods may be implemented on an image forming apparatus such as a color printer, but not limited thereto. That is, an embodiment is implementable on a separate device or a computer operating in association with the image forming apparatus, and furthermore, may be implemented by receiving a program in firmware form of a printer from a separate device such as a server. Accordingly, the methods according to embodiments are not specifically limited to certain places where these are implemented.

As a result of implementing the methods according to embodiments, it is possible to synthesize anaglyph images and printing the same in an adaptive manner depending on glasses, while maintaining 3D perception with respect to specific 3D glasses. Accordingly, color mixing is enhanced, and maximized 3D effect on the printout can be provided.

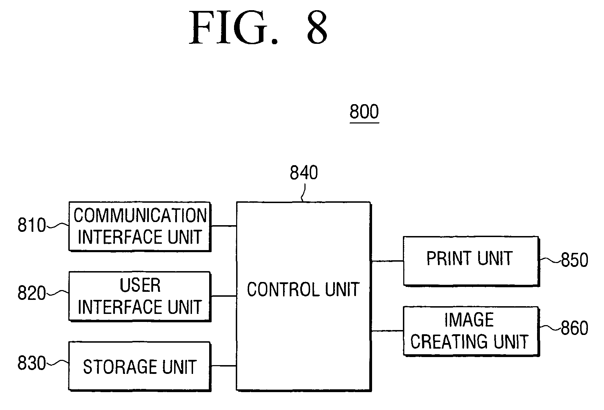

FIG. 8 is a block diagram of an image forming apparatus according to an example embodiment.

Referring to FIG. 8, the image forming apparatus according to an example embodiment may include part or all of a communication interface unit 810, a user interface unit 820, a storage unit 830, a control unit 840, a print unit 850 and an image creating unit 860. As used herein, the phrase "include part or all of" refers to an example in which the communication interface unit 810 and the user interface unit 820 are integrated with each other, or the storage unit 830 and the image creating unit 860 are integrated with each other, or some of the components are omitted. Hereinbelow, an example in which all of the above components are included will be explained for the sake of explanation.

The communication interface unit 810 may perform communication with a print control terminal, for example, a desktop computer, a laptop computer, a mobile phone, or the like, according to compatibility of the communication interface unit 810 to receive the print data with respect to a test color pattern (or stereoscopic image pattern) provided by the print control terminal. If the image forming apparatus 800 dose not store the information about the test color pattern to generate a 3D image as described above, the image forming apparatus 800 receives the color pattern-related information as provided by the print control terminal. When the color pattern information is stored, the color pattern information may be provided when there is a separate request. Given the above, an embodiment is not specifically limited to a manner of storing and printing the color pattern information.

The user interface unit 820 may include an input unit, such as a touchscreen type panel, or input buttons. The user interface unit 820 receives an estimated value about the transmittance characteristic of certain 3D glasses. As used herein, the term 'estimated value' may refer to a selected value of visibility and invisibility of the printed color pattern. Furthermore, the user interface unit 820 may receive additional information including geometrical aligning; color compensation; depth and disparity map estimation; image blurring by two color channels; and pixel information for range reduction of disparity or depth map of the image.

The image creating unit 860 may store a program to create a 3D image, i.e., anaglyph image. By way of example, the image creating unit 860 may create a compensated anaglyph image by executing a prestored program according to the estimated value from the user interface unit 820 and the additional information, such as the geometric aligning of the stereoscopic image. The created anaglyph image is provided to the print unit 850 and printed on a print medium under control of the control unit 840.

Other than those explained above, the components, such as the storage unit 830, the control unit 840 and the print unit 850 of FIG. 8, do not greatly differ from components, such as the storage unit 220 (to be specific, RAM 221), the control unit 210 and the print unit 230 of FIG. 2, and will not be explained in further detail for the sake of brevity.

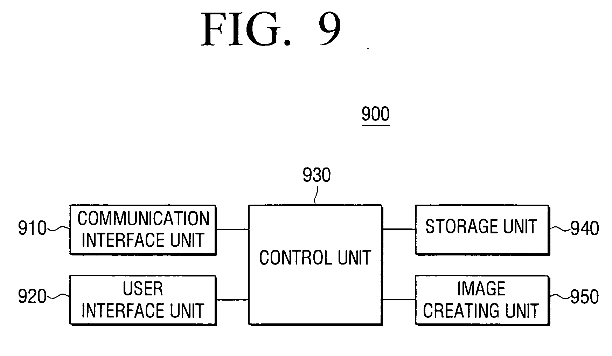

FIG. 9 is a block diagram of a printing control terminal 900 according to an example embodiment.

Referring to FIG. 9, the print control terminal 900 according to an embodiment may include some or all of a communication interface unit 910, a user interface unit 920, a control unit 930, a storage unit 940 and an image creating unit 950. As used herein, the phrase "include part or all of" refers to an example in which the communication interface unit 910 and the user interface unit 920 are integrated with each other, or in which specific component(s) is omitted. Hereinbelow, an example in which all of the above components are included will be explained for the sake of explanation.

Under control of the control unit 930, the communication interface unit 910 receives print data (or pixel data) with respect to a 3D image to be stored at the storage unit 940, and furthermore, receives test color pattern-related information, and sends the data to the image forming apparatus so that the data is printed on a print medium.

Other than those explained above, the components, such as the user interface unit 920, the control unit 930, the storage unit 940, and the image creating unit 950 of FIG. 9, do not greatly differ from components, such as the user interface unit 820, the control unit 840, the storage unit 830 and the image creating unit 860 of FIG. 2, and will not be explained in further detail for the sake of brevity.

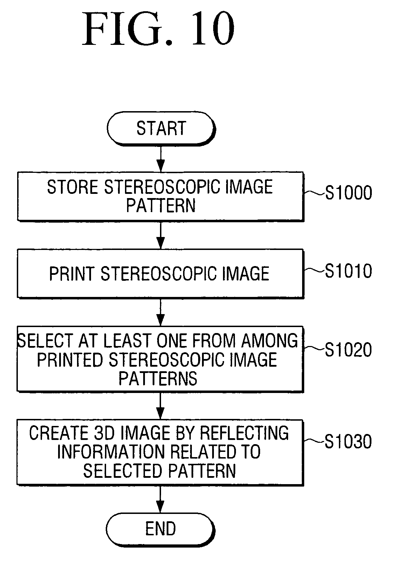

FIG. 10 is a flowchart illustrating an image forming method according to an example embodiment.

Referring to FIG. 10 along with FIG. 8 for convenience of explanation, at operation S1000, the image forming apparatus 800 stores information regarding a stereoscopic image pattern, for example, information regarding a color test pattern. As used herein, the expression 'store' encompasses initial storing in a manufacturing process of an image forming apparatus, storing by user, or storing in response to a separate request information received from a print control terminal such as a computer or server.

At operation S1010, the image forming apparatus 800 prints a stereoscopic image pattern, for example, in response to a user's request.

At operation S1020, the image forming apparatus 800 receives at least one pattern 'selected' from among the printed stereoscopic image patterns. As used herein, the expression 'select(ed)' may encompass an example in which a viewer determines visibility and invisibility of a stereoscopic image pattern with respect to certain 3D glasses and inputs a selected value such as transmittance function value with respect to at least one pattern as a result of determination, and additionally inputs additional information such as geometrical aligning; color compensation; depth and disparity map estimation; image blurring by two color channels; and pixel information for range reduction of disparity or depth map of the image. Depending on embodiments, the 'select(ed)' value may not be necessarily inputted by the user directly. That is, the image forming apparatus 800 may automatically determine and process the related operation. Accordingly, in embodiments, the expression 'select(ed)' is not specifically limited to the certain operations explained above.

At operation S1030, the image forming apparatus 800 reflects the selected pattern-related information such as the selected value explained above, and additional information, to create a 3D image. The created 3D image may then be printed on a printout (print medium) and outputted thereto.

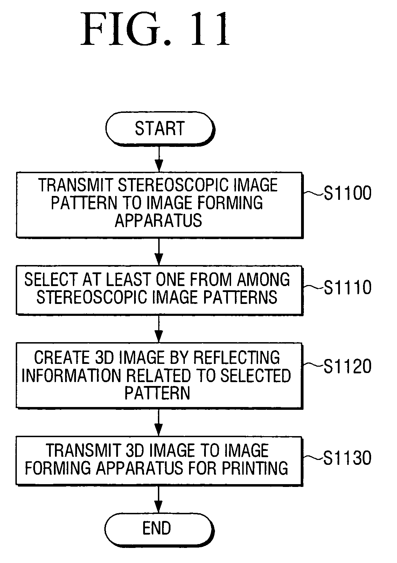

FIG. 11 is a flowchart illustrating a method of controlling printing according to an example embodiment.

Referring to FIG. 11 along with FIG. 9 for convenience of explanation, at operation S1100, the print control terminal 900 transmits the stereoscopic image pattern, i.e., the information regarding the test color pattern to the image forming apparatus. Accordingly, the image forming apparatus prints the corresponding stereoscopic image pattern on a printout.

At operation S1110, the print control terminal 900 receives at least one pattern selected from among the printed stereoscopic image patterns. Since the term 'selected' is already explained above with reference to FIG. 10, this will not be additionally explained for the sake of brevity.

At operation S1120, the print control terminal 900 reflects the information related to the selected pattern and creates 3D image. Since the information related to the selected pattern has been explained above with reference to FIG. 10, this will not be additionally explained for the sake of brevity.

At operation S1130, the print control terminal 900 transmits the created 3D image (for example, data regarding an image) to the image forming apparatus. Accordingly, the image forming apparatus prints the corresponding 3D image data on a printout (print medium).

While it is explained above that all the components according to an example embodiment are connected to each other or operate in association with each other, the accompanying claims are not limited thereto. That is, within the scope of the accompanying claims, it is possible that one or more selected from among the components operate in association with each other. Further, while all the components may be respectively implemented as an independent hardware, it is also possible that some or all of the components are selectively combined and implemented as a computer program having a program module which performs some or all of the combined functions on one or a plurality of hardware. Codes and code segments constructing the computer program may be easily inferred by those skilled in the art. The computer program may be stored on a computer readable medium to be read out and executed, to thus implement the claimed method, or construct the claimed apparatus. The computer readable medium may include a computer readable recording medium and a computer readable transmission medium. The computer-readable recording medium is any data storage device that can store data as a program which can be thereafter read by a computer system. Examples of the computer-readable recording medium include a semiconductor chip device, a read-only memory (ROM), a random-access memory (RAM), a flash memory, CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art.

Although a few preferred embodiments have been shown and described, it will be appreciated by those skilled in the art that various changes and modifications might be made without departing from the scope of the invention, as defined in the appended claims.

**Claims**

1. An image forming apparatus (300), comprising:

   a storage unit (830) to store test color patterns to be used for creation of a three dimensional (3D) image;
   a print unit (850) to print the test color patterns on a print medium;
   a user interface unit (820) to select at least one pattern of the test color patterns; and
   an image creating unit (860) to create the 3D image to be printed by reflecting information related to the selected at least one test color pattern.

2. The image forming apparatus of claim 1, wherein the user interface unit (820) performs at least one of: manual stereo-pair aligning to create the 3D image; parallax change to change depth of the 3D image; estimation of transmittance characteristic of 3D glasses; and adjustment of image size, to thereby reflect the information.

3. The image forming apparatus of claim 2, wherein the image creating unit (860) creates an anaglyph image as the 3D image, and the 3D glasses use a anaglyph manner.

4. The image forming apparatus of claim 2, wherein the information according to the estimation of the transmittance characteristic of the 3D glasses comprises a result of determining visibility and invisibility of the test color pattern through the 3D glasses.

5. The image forming apparatus of any of claims 1 to 4, wherein the user interface unit (820) executes an algorithm to adjust the information so that certain 3D glasses are adaptively used.

6. An image forming method, comprising the steps of:

   storing test color patterns to be used for creation of a three dimensional (3D) image (S1000);
   printing the test color patterns on a print medium (S1010);
   selecting at least one pattern of the test color patterns (S1020); and
   creating the 3D image to be printed by reflecting information related to the selected at least one test color pattern (S1030).

7. The image forming method of claim 6, further comprising the steps of:

   estimating a spectrum transmittance with respect to 3D glasses viewing the 3D image, using the test color patterns (S403);
   adjusting image information regarding a stereoscopic image of the 3D image (S405); and
   creating the 3D image with respect to the stereoscopic image, using the estimated spectrum transmittance and the adjusted image information (S407).

8. The image forming method of claim 7, wherein the step of estimating of the spectrum transmittance comprises the steps of:

> estimating a spectrum transmittance function with respect to a left-side filter of the 3D glasses;
> estimating a spectrum transmittance function with respect to a right-side filter of the 3D glasses; and
> approximating a function estimate with respect to the spectrum transmittance functions of the left- and right-side filters.

9. The image forming method of claim 7, wherein the step of adjusting of the image information (S405) comprises the steps of:

> geometrically aligning left- and right-eye images of the stereoscopic image;
> compensating color of the left- and right-eye images;
> blurring at least one of two color channels of the left- and right-eye images;
> estimating a disparity map;
> correcting the disparity map to reduce disparity value that exceeds preset threshold; and
> changing the left- and right-eye images according to the corrected disparity map.

10. The image forming method of claim 71 wherein the step of adjusting of the image information comprises (S405) the steps of :

> geometrically aligning left- and right-eye images of the stereoscopic image;
> compensating color of the left- and right-eye images;
> blurring at least one of two color channels of the left- and right-eye images;
> determining if a depth map exceeds a preset threshold and if determining so, correcting the depth map to reduce a range of a depth value of a stage; and
> changing the left- and right-eye images according to the corrected depth map.

11. The image forming method of any of claims 9 and 10, wherein a variable at the blurring, a variable at the changing of the disparity map, and the depth map are determined according to a size of the 3D image.

12. The image forming method of any of claims 6 to 11, wherein the printing of the test color patterns comprises printing a series of colors having at least one of brightness, saturation and hue that is different from each other (S401).

**Patentansprüche**

1. Bildformungsvorrichtung (300), die Folgendes umfasst:

> eine Speichereinheit (830) zum Speichern von Testfarbmustern zur Verwendung für die Herstellung eines dreidimensionalen (3D) Bilds;
> eine Druckeinheit (850) zum Drucken der Testfarbmuster auf ein Druckmedium;
> eine Benutzerschnittstelleneinheit (820) zum Wählen mindestens eines Musters der Testfarbmuster und
> eine Bildherstellungseinheit (860) zum Herstellen des zu druckenden 3D-Bilds durch Reflektieren von Informationen, die zu dem gewählten mindestens einem Testfarbmuster in Beziehung stehen.

2. Bildformungsvorrichtung nach Anspruch 1, wobei die Benutzerschnittstelleneinheit (820) mindestens einen der folgenden Punkte durchführt: manuelle Stereo-Paar-Ausrichtung zum Herstellen des 3D-Bilds; Parallaxewechsel zum Verändern der Tiefe des 3D-Bilds; Schätzung der Durchlässigkeitscharakteristik von 3D-Gläsern und Justierung der Bildgröße, um dadurch die Informationen zu reflektieren.

3. Bildformungsvorrichtung nach Anspruch 2, wobei die Bildherstellungseinheit (860) ein Anaglyphbild als das 3D-Bild herstellt und die 3D-Gläser ein Anaglyphverfahren verwenden.

4. Bildformungsvorrichtung nach Anspruch 2, wobei die Informationen gemäß der Schätzung der Durchlässigkeitscharakteristik der 3D-Gläser ein Ergebnis des Bestimmens der Sichtbarkeit und Unsichtbarkeit der Testfarbmuster durch die 3D-Gläser umfassen.

5. Bildformungsvorrichtung nach einem der Ansprüche 1 bis 4, wobei die Benutzerschnittstelleneinheit (820) einen Algorithmus ausführt, um die Informationen so zu justieren, dass gewisse 3D-Gläser adaptiv verwendet werden.

6. Bildformungsverfahren, das die folgenden Schritte umfasst:

Speichern von Testfarbmustern zur Verwendung zur Herstellung eines dreidimensionalen (3D) Bilds (S1000);
Drucken der Testfarbmuster auf einem Druckmedium (S1010);
Wählen mindestens eines Musters der Testfarbmuster (S1020) und
Herstellen des zu druckenden 3D-Bilds durch Reflektieren von Informationen, die das gewählte mindestens eine Testfarbmuster betreffen (S1030).

7. Bildformungsverfahren nach Anspruch 6, das weiterhin die folgenden Schritte umfasst:

Schätzen einer Spektraldurchlässigkeit bezüglich von das 3D-Bild sehenden 3D-Gläsern unter Verwendung der Testfarbmuster (S403);
Justieren von Bildinformationen bezüglich eines Stereobilds des 3D-Bilds (S405) und
Herstellen des 3D-Bilds bezüglich des Stereobilds unter Verwendung der geschätzten Spektraldurchlässigkeit und der justierten Bildinformationen (S407).

8. Bildformungsverfahren nach Anspruch 7, wobei der Schritt des Schätzens der Spektraldurchlässigkeit die folgenden Schritte umfasst:

Schätzen einer Spektraldurchlässigkeitsfunktion bezüglich eines linksseitigen Filters der 3D-Gläser;
Schätzen einer Spektraldurchlässigkeitsfunktion bezüglich eines rechtsseitigen Filters der 3D-Gläser und
Approximieren einer Funktionsschätzung bezüglich der Spektraldurchlässigkeitsinformationen des links- und rechtsseitigen Filters.

9. Bildformungsverfahren nach Anspruch 7, wobei der Schritt des Justierens der Bildinformationen (S405) die folgenden Schritte umfasst:

geometrisches Ausrichten von das linke und rechte Auge betreffenden Bildern des Stereobilds;
Kompensieren von Farbe der das linke und rechte Auge betreffenden Bilder;
unscharfes Abbilden mindestens eines der beiden Farbkanäle der das linke und rechte Auge betreffenden Bilder;
Schätzen eines Disparitätskennfelds;
Korrigieren des Disparitätskennfelds, um einen Disparitätswert zu reduzieren, der einen voreingestellten Schwellwert übersteigt; und
Ändern der das linke und rechte Auge betreffenden Bilder gemäß dem korrigierten Disparitätskennfeld.

10. Bildformungsverfahren nach Anspruch 7, wobei der Schritt des Justierens der Bildinformationen (S405) die folgenden Schritte umfasst:

geometrisches Ausrichten von das linke und rechte Auge betreffenden Bildern des Stereobilds;
Kompensieren von Farbe der das linke und rechte Auge betreffenden Bilder;
unscharfes Abbilden mindestens eines der beiden Farbkanäle der das linke und rechte Auge betreffenden Bilder;
Bestimmen, ob ein Tiefenkennfeld einen voreingestellten Schwellwert übersteigt, und falls dies bestimmt wird, Korrigieren des Tiefenkennfelds, um einen Bereich eines Tiefenwerts eines Stadiums zu reduzieren; und
Ändern der das linke und rechte Auge betreffenden Bilder gemäß dem korrigierten Tiefenkennfeld.

11. Bildformungsverfahren nach einem der Ansprüche 9 und 10, wobei eine Variable bei dem unscharfen Abbilden, eine Variable bei dem Ändern des Disparitätskennfelds und des Tiefenkennfelds gemäß einer Größe des 3D-Bilds bestimmt werden.

12. Bildformungsverfahren nach einem der Ansprüche 6 und 11, wobei das Drucken der Testfarbmuster das Drucken einer Reihe von Farben mit mindestens einem von Helligkeit, Sättigung und Farbton, die voneinander verschieden sind, umfasst (S401).

**Revendications**

1. Appareil de formation d'image (300), comprenant :

   une unité de stockage (830) destinée à stocker des motifs de couleurs de test devant être utilisés pour créer une image tridimensionnelle (3D) ;
   une unité d'impression (850) destinée à imprimer des motifs de couleurs de test sur un support d'impression ;
   une unité d'interface utilisateur (820) destinée à sélectionner au moins un motif parmi les motifs de couleurs de test ; et
   une unité de création d'image (860) destinée à créer l'image 3D devant être imprimée en répercutant des informations liées audit au moins un motif de couleur de test sélectionné.

2. Appareil de formation d'image selon la revendication 1, dans lequel l'unité d'interface utilisateur (820) effectue au moins l'un : d'un alignement manuel de paire stéréo pour créer l'image 3D ; d'une modification de parallaxe pour modifier la profondeur de l'image 3D ; d'une estimation de la caractéristique de transmittance de lunettes 3D ; et d'un ajustement de la taille de l'image pour ainsi répercuter les informations.

3. Appareil de formation d'image selon la revendication 2, dans lequel l'unité de création d'image (860) crée une image d'anaglyphe en tant qu'image 3D, et dans lequel les lunettes 3D utilisent une sorte d'anaglyphe.

4. Appareil de formation d'image selon la revendication 2, dans lequel les informations obtenues conformément à l'estimation de la caractéristique de transmittance des lunettes 3D comprennent un résultat de détermination de la visibilité et de l'invisibilité du motif de couleurs de test à travers les lunettes 3D.

5. Appareil de formation d'image selon l'une quelconque des revendications 1 à 4, dans lequel l'unité d'interface utilisateur (820) exécute un algorithme pour ajuster les informations afin que certaines lunettes 3D soient utilisées de manière adaptative.

6. Procédé de formation d'image comprenant les étapes consistant à :

   stocker des motifs de couleurs de test devant être utilisés pour créer une image tridimensionnelle (3D) (S1000) ;
   imprimer les motifs de couleurs de test sur un support d'impression (S1010) ;
   sélectionner au moins un motif parmi les motifs de couleurs de test (S1020) ; et
   créer l'image 3D devant être imprimée en répercutant des informations liées audit au moins un motif de couleur de test sélectionné (S1030).

7. Procédé de formation d'image selon la revendication 6, comprenant en outre les étapes consistant à :

   estimer une transmittance spectrale par rapport à des lunettes 3D observant l'image 3D, en utilisant les motifs de couleurs de test (S403) ;
   ajuster les informations d'image concernant une image stéréoscopique de l'image 3D (S405) ; et
   créer l'image 3D par rapport à l'image stéréoscopique en utilisant la transmittance spectrale estimée et les informations d'image ajustées (S407).

8. Procédé de formation d'image selon la revendication 7, dans lequel l'étape d'estimation de la transmittance spectrale comprend les étapes consistant à :

   estimer une fonction de transmittance spectrale par rapport à un filtre de côté gauche des lunettes 3D ;
   estimer une fonction de transmittance spectrale par rapport à un filtre de côté droit des lunettes 3D ; et
   déterminer de façon approximative une estimée de fonction par rapport aux fonctions de transmittance spectrale des filtres de côté gauche et droit.

9. Procédé de formation d'image selon la revendication 7, dans lequel l'étape d'ajustement des informations d'image (S405) comprend les étapes consistant à :

   aligner géométriquement des images d'yeux gauche et droit de l'image stéréoscopique ;
   compenser la couleur des images d'yeux gauche et droit ;
   rendre flou au moins l'un de deux canaux de couleurs des images d'yeux gauche et droit ;

estimer une carte de disparité ;
corriger la carte de disparité afin de réduire la valeur de disparité qui dépasse un seuil préréglé ; et
modifier les images d'yeux gauche et droit conformément à la carte de disparité corrigée.

**10.** Procédé de formation d'image selon la revendication 7, dans lequel l'étape d'ajustement des informations d'image (S405) comprend les étapes consistant à :

aligner géométriquement les images d'yeux gauche et droit de l'image stéréoscopique ;
compenser la couleur des images d'yeux gauche et  droit ;
rendre flou au moins l'un de deux canaux de couleurs des images d'yeux gauche et droit ;
déterminer si une carte de profondeur dépasse un seuil préréglé et si oui, corriger la carte de profondeur afin de réduire d'un pas une plage d'une valeur de profondeur ; et
modifier les images d'yeux gauche et droit conformément à la carte de profondeur corrigée.

**11.** Procédé de formation d'image selon l'une quelconque des revendications 9 et 10, dans lequel une variable de flou, une variable de modification de la carte de disparité et la carte de profondeur sont déterminées en fonction de la taille de l'image 3D.

**12.** Procédé de formation d'image selon l'une quelconque des revendications 6 à 11, dans lequel l'impression des motifs de couleurs de test comprend l'impression d'une série de couleurs ayant au moins l'une de la luminosité, de la saturation et de la teinte différente de chacune des autres (S401).

# FIG. 1

LOAD STEREOSCOPIC IMAGE(S101)

ALIGN STEREOSCOPIC IMAGE(S103)

CREATE ANAGLYPH
IMAGES(105)

PRINT ANAGLYPH
IMAGE(S107)

# FIG. 2

200

# FIG. 3

LOAD STEREOSCOPIC IMAGE(S301)

ALIGN STEREOSCOPIC IMAGE(S303)

DEFOCUS COLOR CHANNEL(S305)

PRINT COLOR PATTERN(S307)

ESTIMATE TRANSMITTANCE CHARACTERISTIC(S309)

CREATE ANAGLYPH IMAGE(S311)

PRINT ANAGLYPH IMAGE(S313)

# FIG. 4

```
        ( START )
            │
            ▼
┌─────────────────────────┐
│ PRINT TEST COLOR PATTERN OF │  ~S401
│ TARGET IMAGE FORMING APPARATUS │
└─────────────────────────┘
            │
            ▼
┌─────────────────────────┐
│ ESTIMATE GLASS TRANSMITTANCE │  ~S403
│ CHARACTERISTIC WITH RESPECT TO │
│   COLORS PRINTED BY TARGET   │
│     IMAGE FORMING APPARATUS  │
└─────────────────────────┘
            │
            ▼
┌─────────────────────────┐
│  PREPARE STEREOSCOPIC IMAGE │  ~S405
└─────────────────────────┘
            │
            ▼
┌─────────────────────────┐
│   CREATE ANAGLYPH IMAGE OF   │  ~S407
│ STEREOSCOPIC IMAGE ADAPTIVE │
│      TO GIVEN GLASSES        │
└─────────────────────────┘
            │
            ▼
┌─────────────────────────┐
│    PRINT ANAGLYPH IMAGE     │  ~S409
└─────────────────────────┘
            │
            ▼
         ( END )
```

# FIG. 5

Hue 0°　　　　　　　　　　　　　　　　Hue 180°　　　　　　　　　　　　　　　Hue 330°

| Column i=1 | Saturation 1 |
| Column i=2 | Saturation 0.8 |
| Column i=3 | Saturation 0.6 |
| Column i=4 | Saturation 0.4 |
| Column i=5 | Saturation 0.2 |

Position number j : 1 2 3 4 5 6 7 8 9 10 11 12 13 14 15 16 17 18 19 20 21 22 23 24 25 26 27 28 29 30 31 32 33 34

red　　yellow　　green　　cyan　　blue　　magenta

EP 2 555 051 B1

# FIG. 6

START

S601 — COLUMN NUMBER (i)=1

S603 — FOR RED COLOR FILTER, OBSERVE FROM POSITION (j=2) (j = 19 FOR CYAN FILTER) THE TWO MOST ADJACENT POINTS (j = 1,2,3)(j =18,19,20 THROUGH CYAN FILTER) THROUGH COLOR PATTERN COLUMN(i) AND COLOR FILTER

S605 — COLOR VISIBLE? —Y→ COLUMN NO. (i)=i+1 — S609

N

S607 — COLUMN NO. (i)

S611 — i==1 —Y→ SATURATION = 1 MAXIMUM TRANSMITTANCE=0.90 — S613 break

N

S615 — i==2 —Y→ SATURATION=8 MAXIMUM TRANSMITTANCE=0.85 — S617 break

N

S619 — i==3 —Y→ SATURATION=0.6 MAXIMUM TRANSMITTANCE=0.65 — S621 break

N

S623 — i==4 —Y→ SATURATION0.4 MAXIMUM TRANSMITTANCE=0.50 — S625 break

N

S627 — DEFAULT → SATURATION=0.2 MAXIMUM TRANSMITTANCE=0.45 — S629 break

S631 — POSITION NO. AT ROW (j)=1

S633 — LAST ROW (j = 34)? —Y→

N

S635 — COLORS VISIBLE? —N→ GRADE = 5 — S637

Y

S639 — GRADE EVALUATION( j=j+1)

END

# FIG. 7

GRADE =5(COMPLETELY INVISIBLE)

GRADE =4(PARTIALLY VISIBLE)

GRADE =3(PARTIALLY VISIBLE)

GRADE =2(PARTIALLY VISIBLE)

GRADE =1(PARTIALLY VISIBLE)

GRADE =0(FULLY VISIBLE)

# FIG. 8

800

840

810 — COMMUNICATION INTERFACE UNIT

820 — USER INTERFACE UNIT

830 — STORAGE UNIT

CONTROL UNIT

PRINT UNIT — 850

IMAGE CREATING UNIT — 860

# FIG. 9

900

930

910 — COMMUNICATION INTERFACE UNIT

920 — USER INTERFACE UNIT

CONTROL UNIT

STORAGE UNIT — 940

IMAGE CREATING UNIT — 950

# FIG. 10

```
                    ┌─────────────┐
                    │    START    │
                    └──────┬──────┘
                           │
                           ▼
        ┌──────────────────────────────────┐
        │    STORE STEREOSCOPIC IMAGE       │─── S1000
        │            PATTERN                │
        └──────────────────┬───────────────┘
                           │
                           ▼
        ┌──────────────────────────────────┐
        │     PRINT STEREOSCOPIC IMAGE      │─── S1010
        └──────────────────┬───────────────┘
                           │
                           ▼
        ┌──────────────────────────────────┐
        │  SELECT AT LEAST ONE FROM AMONG   │─── S1020
        │    PRINTED STEREOSCOPIC IMAGE     │
        │            PATTERNS               │
        └──────────────────┬───────────────┘
                           │
                           ▼
        ┌──────────────────────────────────┐
        │  CREATE 3D IMAGE BY REFLECTING    │─── S1030
        │     INFORMATION RELATED TO        │
        │        SELECTED PATTERN           │
        └──────────────────┬───────────────┘
                           │
                           ▼
                    ┌─────────────┐
                    │     END     │
                    └─────────────┘
```

# FIG. 11

```
                    ┌─────────────┐
                    │    START    │
                    └──────┬──────┘
                           │
                           ▼
        ┌───────────────────────────────────┐
        │  TRANSMIT STEREOSCOPIC IMAGE       │── S1100
        │    PATTERN TO IMAGE FORMING        │
        │          APPARATUS                 │
        └───────────────┬───────────────────┘
                        │
                        ▼
        ┌───────────────────────────────────┐
        │  SELECT AT LEAST ONE FROM AMONG    │── S1110
        │    STEREOSCOPIC IMAGE PATTERNS     │
        └───────────────┬───────────────────┘
                        │
                        ▼
        ┌───────────────────────────────────┐
        │  CREATE 3D IMAGE BY REFLECTING     │── S1120
        │  INFORMATION RELATED TO SELECTED   │
        │             PATTERN                │
        └───────────────┬───────────────────┘
                        │
                        ▼
        ┌───────────────────────────────────┐
        │   TRANSMIT 3D IMAGE TO IMAGE       │── S1130
        │  FORMING APPARATUS FOR PRINTING    │
        └───────────────┬───────────────────┘
                        │
                        ▼
                 ┌─────────────┐
                 │     END     │
                 └─────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040160640 A

- US 20040125447 A

**Non-patent literature cited in the description**

- **ERIC DUBOIS.** A projection method to generate anaglyph stereo images. *Proc. of ICASSP, IEEE International Conference ''Acoustic, Speech, and Signal Processing,* 2001, vol. 3, 1661-1664